Europäisches Patentamt

European Patent Office

Office européen des brevets

(11) Publication number: **0 435 097 A1**

# EUROPEAN PATENT APPLICATION

(21) Application number: **90124122.4**

(22) Date of filing: **13.12.90**

(51) Int. Cl.5: **B01D 29/01, B01D 29/68**

(30) Priority: **13.12.89 IT 1177289 U**

(43) Date of publication of application:
**03.07.91 Bulletin 91/27**

(84) Designated Contracting States:
**DE FR GB**

(71) Applicant: **MODERNA S.p.A.**
**Via Tosarelli 320**
**I-40055 Villanova Di Castenaso (Province of Bologna)(IT)**

(72) Inventor: **Squilloni, Giovanni**
**Viale Redi 249**
**I-50144 Firenze(IT)**

(74) Representative: **Staub, Gabriella, Dr.-Ing. et al**
**Baaderstrasse 3**
**W-8000 München 5(DE)**

(54) **A filter with a self-cleaning net.**

(57) A net filter with a net for solvents or other low-viscosity liquids, comprising a filter body, a filtering net diaphragm and a fitted filter cover fitted on the body, which performs a sealing action on the filter body by means of locking means and a gasket, the liquid to be filtered entering the filter body, crossing the net diaphragm, reaching a filtered condition beyond said diaphragm and getting out through the filter body and the filter cover, characterized in that the net diaphragm cleaning occurs at intervals during which the filtering action does not occur, by means of a device capable of creating a rotating shower of cleaned liquid which invests and uniformly washes in a counterstream direction said net diaphragm, said device being located inside the filter cover facing the net diaphragm and being able to rotate around an approximately orthogonal axis with respect to said diaphragm.

FIG.1

# A FILTER WITH A SELF-CLEANING NET

The invention relates to a net filter with a net for solvents or other low-viscosity liquids, comprising a filter body, a filtering net diaphragm and a fitted filter cover fitted on the body, which performs a sealing action on the filter body by means of locking means and a gasket, the liquid to be filtered entering the filter body, crossing the net diaphragm, reaching a filtered condition beyond said diaphragm and getting out through the filter body and the filter cover. Within the filter, the net diaphragm cleaning occurs at intervals during which the filtering action does not occur, by means of a device capable of creating a rotating shower of cleaned liquid which invests and uniformly washes in a counterstream direction said net diaphragm, said device being located inside the filter cover facing the net diaphragm and being able to rotate around an approximately orthogonal axis with respect to said diaphragm.

Conveniently the rotation of said device capable of creating a rotating shower is caused by the exit of the pressurized washing liquid from a plurality of inclined holes or nozzles in order to create a reaction in a tangential direction according to the known principle of the hydraulic windlass; said device comprising a hollow rotating cap on which said nozzles are fitted or in which said holes are machined, said cap receiving the liquid from a pipe at the very end of which, inside the filter cover, said pipe is rotatingly mounted.

The drawing shows a possible embodiment of the invention and particularly:

figure 1 shows a schematic view of the net filter according to the invention, mounted in an apparatus which utilizes some kind of solvent;

figure 2 shows a diagrammatic view according to line II-II of figure 1;

figure 3 shows a sectional view according to line III-III of figure 2.

As appears from the enclosed drawing, said filter according to the invention which, in the drawing, is of a cylindrical shape with bottom shaped caps, and is vertically arranged, comprises a filter body 1; said body 1 has the shape of a hollow container which internally has, at a certain height, annular means 3 arranged for removably securing a unit 5 made of one or more layers of a thick net mostly made of stainless steel. Above the unit 5 a filter cover 7 is fitted and sealed on the filter body 1, is secured to said body by means of locking means 9. The rims of the cover 7 and of the body 1 can have suitable housings for a gasket capable of performing the sealing; said gasket can be for instance manufactured of solvent resistant rubber.

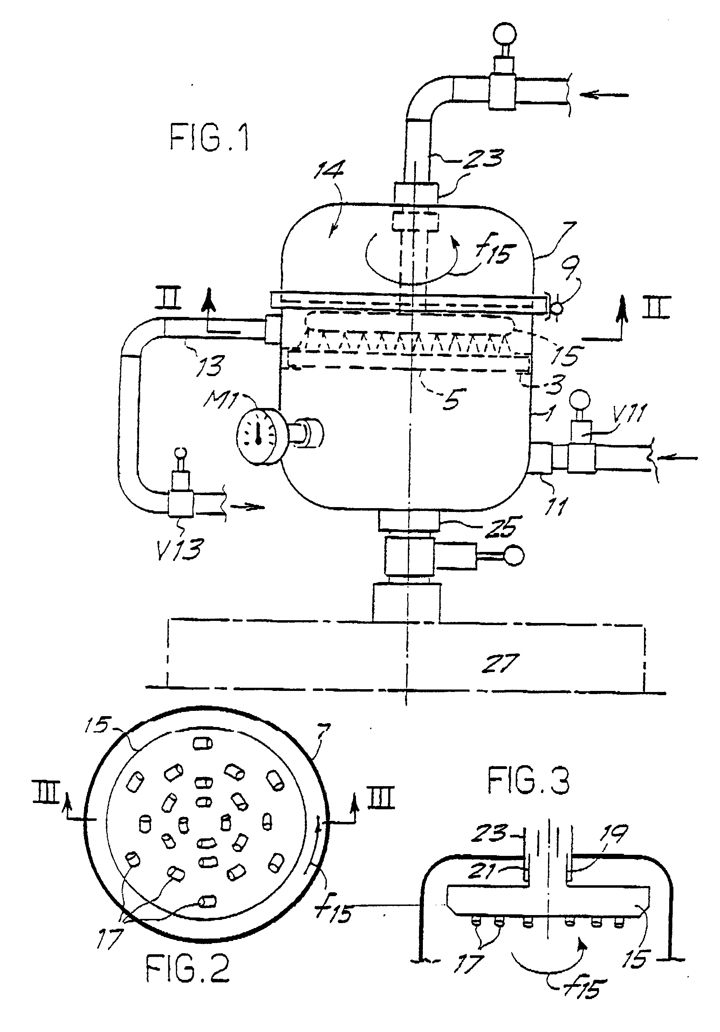

A frustrum-shaped pipe 11 is connected to the filter body 1, underneath the unit 5, in order to allow the intake of the liquid to be filtered and a frustrum-shaped pipe 13 below the unit 5 is linked for the exit of the filtered liquid. On said frustrum-shaped pipes, suitable gate valves V11 and V13 are arranged. The filter cover 7 is well developed in height direction and inside it a device 14 is located, capable of creating a rotating shower of clean liquid which impacts and uniformly washes, in a direction against the stream, the filter unit 5, every time it is necessary, obviously at convenient intervals during which the filtering action is ceased. More precisely the device 14 includes a hollow impeller 15 which has, on the side leaning on the unit 5, a plurality of holes or nozzles 17 which deliver the washing liquid. On the opposite side said impeller 15 has a hollow hub 19, to be secured, so as to be able to freely rotate, at the end 21 of a pipe 23 of supply of the washing liquid, said liquid centrally crossing the filter cover bottom wall 7 in order to allow the end 21 to protrude outside. As it appears from figures 2 and 3, the nozzles 17 are manufactured in such a way as to deliver the liquid against the unit 5, according to a direction which is inclined with respect to the symmetry axis of the filter but which is approximately perpendicular to the segment which connects the nozzle base center to the rotation axis. Thus, according to the principle of action and reaction, the exit of the liquid from the nozzles 17 brings about a corresponding tangential action which rotates the impeller 15 in the direction of the arrow F15, i.e. in a direction opposite to the direction of each jet. The washing liquid enters with a pressure the filter through the pipe 23, conferring the impeller 15 a rotation motion, and from said impeller it is delivered through the nozzles 17, whose jets invest the net unit 5, and is collected inside the filter body 1 from which it is unloaded by means of a pipe piece 25 in order to be collected in a tank 27. Either upstream of the pipe 23 or downstream of the pipe piece 25 suitable gate valves V23 and V25 are inserted. Upstream of the pipe 23 a pump is usually arranged (note shown) which puts under pressure the washing liquid. On the filter body 1 a manometer M1 can be also arranged.

From figure 1 it can be easily understood which is the operation of the filter according to the invention. When it performs its normal filtering action, valves V11 and V13 are opened and the liquid which enters the body 1 of the pipe 11 crosses the filtering unit 5 from downwards toward upwards (in the drawing) and comes out from the frustrum-shaped pipe 13. When, also from the pressure value displayed on the manometer M1, it appears to be necessary to proceed to the cleaning of the filtering unit 5, valves V11 and V13 are closed, valves V23 and V25 are opened and the pump is started. After a short time the numerous inclined and rotating jets exiting from the nozzles 17 are able to remove, from the metallic net(s) of the unit 5, all the clogging particles coming out from the body 1 along with the washing liquid which is collected in the tank 27.

After the washing the filter is once again operational and its use can be restarted, being able to perform operations inverse with respect to the ones above described.

As it appears from the above description said self-cleaning filter, according to the invention, presents remarkable advantages, specifically if compared to normal cartridge-filters employed in devices such as clothing dry-cleaning machines, where solvents are employed. First of all the disassembly of the filter is not required in order to recover its filtering action.

The increased manometer pressure points out the major or minor filter clogging level and consequently it also points out when it is necessary to proceed to clean it up. Most of all the ecological advantages are remarkable because there is no need to discard a cartridge made of paper and soaked with a high-polluting kind of solvent and which, in conformity to the law, cannot be thrown away among solid urban waste.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A net filter for solvents or other low-viscosity liquids, including a filter body, a diaphragm having a filtering net and a fitted filter cover and sealed on the filter body by means of locking means and a suitable gasket, said liquid to be filtered entering the filter body, crossing the net diaphragm and exiting in filtered condition beyond said diaphragm from the filter body or the filter cover, characterized in that the cleaning of the net diaphragm is performed at intervals during which no filtering action occurs, by means of a device capable of creating a rotating shower of clean liquid which uniformly impacts and washes, in a direction against the stream, the net diaphragm, said device being located inside the filter cover facing the net diaphragm and being able to rotate around an axis approximately orthogonal to said diaphragm.

2. Net filter as claimed in the preceding claim, characterized in that the rotation of the device, capable of creating a rotating shower, is caused by the exiting of washing liquid under pressure from a plurality of inclined holes or nozzles so that a reaction in a tangential direction is created, according to the known principles of the hydraulic windlass, said device including a hollow rotating cap on which said nozzles are fitted or in which said holes are machined, the cap receiving the liquid from a pipe at the end of which, inside the filter cover, said cap is mounted so as to be able to rotate.

3. Net filter as claimed in the preceding claims, characterized in that the liquid employed for the washing is a portion of the liquid on which the filtering action is exercised.

4. Net filter as claimed in the preceding claims, characterized in that the washing liquid can have characteristics different from liquid on which the filtering action is exercised and can be conveyed into a circuit different from the one of the washing liquid.

5. Net filter as claimed in the preceding claims, characterized in that on the filter body a manometer is arranged which indicates the liquid pressure during the filtering procedure; increased pressure values pointing out to the clogging and to the need of the filtering diaphragm to be cleaned.

FIG.1

FIG.2

FIG.3

European
Patent Office

# EUROPEAN SEARCH REPORT

Application Number

## EP 90 12 4122

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 378 143 (JENAG EQUIPMENT)<br>* Columns 1-6 *<br>- - - | 1,3,5 | B 01<br>D 29/01<br>B 01 D 29/68 |
| Y | | 2 | |
| Y | AU-A-4 629 95 (ROBERT LAWRENCE LEWIS)<br>* Page 4, last paragraph; page 5, paragraph 1 *<br>- - - - - | 2 | |
| | | | **TECHNICAL FIELDS SEARCHED (Int. Cl.5)** |
| | | | B 01 D |

The present search report has been drawn up for all claims

| Place of search | Date of completion of search | Examiner |
|---|---|---|
| The Hague | 01 March 91 | DE PAEPE P.F.J. |